# EUROPEAN PATENT APPLICATION

(11) **EP 1 197 510 A1**
(43) Date of publication of application: **17.04.2002**
(21) Application number: 00203531.9
(22) Date of filing: 13.10.2000
(51) Int. Cl.: C08G 63/00, G03G 9/087

(54) **A polyester and a toner composition**

(71) Applicant: DSM N.V., 6411 TE Heerlen (NL)
(72) Inventor: Driessen, Karin Johanna Maria, 7545 VL Enschede (NL); Belder, Eimbert Gerrit, 8042 EX Zwolle (NL); Bolink, Hendrik Jan, 6221 JH Maastricht (NL)

(57) **Abstract**

The invention relates to an amorphous polyester having a dynamic viscosity η (120°C, 1 rad/sec) between 50 and 50000 Pas, a dynamic viscosity η (180°C,1 rad /sec) between 0.1 and 10000 Pas and a phase angle δ (120°C,1 rad /sec) between 20 and 85 degrees.

The amorphous polyester comprises di-funtional acid- and/or alcohol units and/or multifunctional acid- and/or alcohol units and mono-functional acid units and/or mono-functional alcohol units.

The invention also relates to a toner composition comprising this polyester.

## Description

The present invention relates to a polyester and a toner composition comprising this polyester,

As disclosed in "Electrography and development physics" by L.B. Schein (Volume 14, pages 26-49) electrography is a complex process involving in most embodiments distinct steps being charging, exposing, developing, transfer, fusing and cleaning. During the development step the toner particles are brought into the vicinity of the latent electrostatic image. By virtue of the electric field the toner adheres to the latent image, transforming it into a real image. Next the developed toner is transferred to the paper. The image is fixed to the paper by melting or fusing the toner into the paper surface. The fusing of the toner onto or in the paper may be done by non-contact heating techniques, such as for example flash fusing, and by contact heating techniques such as for example press heating by means of heat rollers. This heating technique is mainly used since the most efficient heat transfer may be achieved allowing for high speed during the fixing step.

A toner composition may comprise a resin, a colorant, a charge control agent, magnetic material, carrier material and additives. The resin is an important component of the toner and as such governs the major properties such as for example good pulverizability, good pigment dispersability, blocking resistance, electric properties, good fixing properties and offset resistance. Resins that may be used in toner compositions are for example, epoxy resins, polyester resins, polystyrene resins,(meth)acrylate resins and styrene (meth) acrylates.

The use of heated rollers in the fixing step requires resins that may be fixed at low temperatures while they prevent offset to the heated rollers. Polyesters may be used because of their excellent low temperature fixing properties. To prevent the occurrence of hot offset of the toner to the heated fuser rolls branched and crosslinked resins have been proposed already. The branched and crosslinked polyesters may be obtained by a process as disclosed in for example US-A-3938992, DE-A-3518414 and EP-A-31269. The use of poly functional acid units or alcohol units results in highly branched and/ or slightly crosslinked structures, only if the polycondensation reaction is allowed to proceed long enough. At the same time, however, the viscosity of the reaction mixture rises rapidly as a function of the polycondensation time. As a result of this rapid viscosity rise at the end of the polycondensation reaction it is difficult to control the exact end-point of the polymerisation process and achieve reproducible products. Many attempts have been proposed to control the polymerisation degree at the end of the polycondensation reaction. Most of these procedures are similar to the process utilized to obtain high molecular weight polyethylene terepthtalate and polybutylene terephthalate.in which method the external reaction conditions are selected in such a way that the conversion speed is decreased when the reaction is about to reach completion. This requires a thorough monitoring of the reaction process. In the production of polyesters for toners there is an additional risk of creating a crosslinked polyester when multifunctional monomers are present in the reaction mixture. A high degree of crosslinking results in a high viscosity which makes it difficult to remove the product from the reactor.

It is the object of the present invention to provide a resin and a process to prepare this resin which has to be applied in a toner composition having a good low-temperature fixability and the required offset resistance.

The invention is characterised in that the resin is an amorphous polyester comprising di- functional acid- and/or alcohol units and/or multi - functional acid- and/or alcohol units and mono-functional acid and/or mono-functional alcohol units.

The multi functional unit is a tri- or higher functional unit.

According to a further preferred embodiment of the invention the polyester has a dynamic viscosity η (120°C, 1 rad/sec) between 50 and 50000Pas, a dynamic viscosity η (180°C, 1 rad/sec) between 0.1 and 10000 Pas and a phase angle δ (120°C, 1 rad/sec) between 20 and 85 degrees.

A toner composition comprising the polyester according to the invention shows simultaneously a low-temperature fixability, anti-blocking properties and a high temperature offset resistance.

The dry toner may be used, for example, for developing an electrostatic image in electrography, electrostatic recording or electrostatic printing.

According to a preferred embodiment of the invention the amorphous polyester has a dynamic viscosity η (120°C, 1 rad/sec) between 1000 and 10000 Pas, a dynamic viscosity η (180°C,1 rad/sec) between 1 and 1000 Pas and a phase angle δ (120°C,1 rad/sec) between 40 and 80 degrees.

The dynamic viscosity and the phase angle are determined according to ASTM D440-95A.

Polyesters are generally based on alcohol units and acid units. Preferably, the polyester may be obtained from aromatic poly carboxylic acids. Suitable difunctional acids include for example phthalic acid, isophthalic acid, naphthalene dicarboxylic acid, terephthalic acid, pyromellitic acid, trimellitic acid, 3,6-dichlorophthalic acid and tetrachlorophthalic acid. Polyesters may also be obtained from the anhydrides, acid chlorides and lower alkyl esters thereof. The carboxylic acid component generally consists of at least 50 mole %, preferably at least 70 mole %, of isophthalic acid and/or terephthalic acid.

Cycloaliphatic and/or acyclic polycarboxylic acids such as for example cyclohexane dicarboxylic acid (CHDA), tetrahydrophthalic acid, hexa hydro endomethylene terephthalic acid, hexahydrophtalic acid and their anhydrides, hexachloro-tetrahydrophthalic acid, azelaic acid, sebacic acid, decane dicarboxylic acid, dimer fatty acid, adipic acid, succinic acid and maleic acid may be used in amounts of up to 30 mole % and preferably of up to 20 mole % of the total of carboxylic acids. Hydroxycarboxylic acids and/or lactones may also be applied, such as 12-hydroxystearic acid and epsilon-caprolactone.

Furthermore, difunctional alcohol units may be used and include for example ethylene glycol, 1,2-propanediol, 1,3-propanediol, 1,2-butanediol, 1,4-butanediol, 1,3-butanediol, 2,2-dimethyl-1,3-propanediol (= neopentyl glycol), the hydroxypivalic acid ester of neopentyl glycol, 2,5-hexanediol, 1,6-hexanediol, 2,2-[bis-(4-hydroxy-cyclohexyl]-propane, 1,4-dimethylol cyclohexane, diethylene glycol, dipropylene glycol, polyoxypropylene-(n)-polyoxyethylene-(n')-2,2-bis(4-hydroxyphenyl)propane, polyoxypropylene (n)-2,2-bis(4-hydroxyphenyl)propane, polyoxyethylene (n)-2,2-bis(4-hydroxyphenyl)propane, and polyoxypropylene (n)-hydroquinone (wherein each of n and n' is a number of from 2 to 6).

Minor amounts of multi-functional acid units such as for example, trimellitic acid, trimellitic anhydride, pyromellitic acid, trimesic acid,anhydrous methyl trimellitate, anhydrous ethyl trimellitate , trimethyl trimellitate and tetracarboxylic benzene. These units are preferably present in an amount less than for example 25 % by weight relative to the total amount of monomers. More preferably this amount is less than 10%.

Minor amounts of multi-functional alcohol units such as for example glycerol, hexanetriol, pentaerythritol, sorbitol, trimethylol ethane, ditrimethylol propane, trimethylol propane and tris-(2-hydroxyethyl)-isocyanurate may be added to the above mentioned di-functional monomers to form a highly branched structure or weakly crosslinked network to provide offset resistance during the fixing step.

These units may be present in an amount less than for example 25 % by weight relative to the total amount of monomers. More preferably this amount is less than 10%.

Examples of suitable monofunctional acid units include for example benzoic acid, tert. butylbenzoic acid, hexahydrobenzoic acid, napthalene carboxylic acid, para toluene sulphonic acid, naphtalene sulphonic acid and/or saturated aliphatic monocarboxylic acids.

Preferably, the monofunctional acid units are present in an amount less than about 30 % by weight relative to the total amount of monomers. More preferably this amount is less than 10% by weight.

Examples of suitable monofunctional alcohol units include for example octanol, butanol, 2-ethylhexanol, isodecylalcohol, cyclohexanol, pentanol, hexanol and/or benzylalcohol

Preferably, the monofunctional alcohol units are present in an amount less than about 30 % by weight relative to the total amount of monomers. More preferably this amount is less than 10% by weight.

Preferably the polyester according to the invention comprises monocarboxylic acid units.

The polyester is prepared by esterification or transesterification, whether or not in the presence of customary catalysts such as for example dibutyl tin oxide or tetrabutyltitanate. By proper selection of both the preparation conditions and the COOH/OH ratio end products may be obtained that having acid functional end groups or having hydroxy functional end groups.

It is an important advantage of the present invention that there is no need to monitore the end of the reaction very carefully

In case of an acid functional end group the acid number is usually between 5 and 45 mg KOH/gr resin and the hydroxyl number of the polyester is generally between 0 and 20 mg KOH/gr resin, and preferably lower than 10 and more preferably being lower than 5.

In case of a hydroxy functional end group the acid number is generally lower than 15, preferably lower than 10 and the hydroxyl number is generally between 10 and 50 mg KOH/gr resin

The ratio between mono-, di and /or multifunctional acid or alcohol units determines also the average acid number and hydroxyl number. The electrical properties of the resulting toner are best when the ratio mono- and multi functional acid or alcohol in combination with the ratio di-alcohol and di-acid is such that the acid number is lower than 35, preferably lower than 20.

The glass transition temperature of the polyester is preferably in the range of between 30°C to 90°C, and is more preferably in the range of between 55°C to 70°C.

The toner composition according to the invention may comprise a resin being the polyester according to the invention, a colorant, a charge control agent, magnetic material and/or additives. The amounts of the components are selected to be dependent of the specific end-use.

The resin to be applied in the toner composition may also be a mixture of the polyester according to the invention and another resin such as for example a polyester, polyamide, polyolefine, styrene (meth)acrylate, styrene butadiene, crosslinked styrene polymer, epoxy resin, polyurethane, vinyl resin and/or polyester imide.

Suitable charge control agents include for example a possitive-charge control agent or negative-charge control agent.Examples of the positive-charge control agent include nigrosine dyes, triphenylmethane dyes containing a tertiary amine as a pendant group, quaternary ammonium salt compounds, cetyltrimethyl ammonium bromide, polyamine resins and imidazole derivatives.Examples of the negative-charge control agent include metal-containing azo dyes, copper phthalocyanine dyes, metal complexes of salicylic alkyl derivatives and quaternary ammonium salts.

The charge control agent may be incorporated in the toner in an amount from 0.1 to 8.0% by weight, preferably from 0.2 to 5.0% by weight, based on the amount of the binder resin.

A toner may, for example, be obtained by uniformely dispersing additives such as for instance, a colorant, a charge control agent, a magnetic material and/or a modifier into the polymer. The resulting mixture is melt kneaded, cooled, pulverized, and then classified to thereby obtain a toner having an average particle diameter of 5 to 15 µm. This toner may be mixed with a carrier powder, i.e. an iron oxide carrier, a spherical iron oxide carrier, or a ferrite carrier, to give a dry two-component developer. In this case, the carrier is used as it is or after being coated with a resin or another material. It is also possible to apply a chemical method to obtain the toner using the polyester according to the invention.

In the case of producing a one-component toner using the polyester resin according to the invention of the magnetic material used may be a powder of a ferromagnetic metal such as for example iron, cobalt nickel or an alloy or compound containing an element exhibiting ferromagnetism such as for example ferrite, hematite or magnetite. The magnetic material may be used in the form of a fine powder having an average particle diameter of from 0.1 to 1 µm and the amount of the magnetic material dispersed into the binder resin may be from 30 to 70 parts by weight per 100 parts by weight of the binder resin.

The invention will be elucidated by means of the following non-restrictive examples.

### Example 1

### Preparation of a polyester resin

To a 6 litre reactor vessel fitted with a thermometer, a stirrer and a destillation device the following raw materials were charged: 300 g of trimethylolpropane, 1612 g neopentylglycol 2383 g isophthaalzuur, 211 g benzoëzuur, 319 g cyclohexaandicarbonzuur, 2,25 g dibutyl tin oxide and 4,5 g of tris-nonylphenylphosphite. Stirring was then applied and a light nitrogenflow was passed over the reaction mixture. The temperature was gradually raised to a maximum of of 235°C and the reaction water was distlled off. The reaction was continued until the acid number of the polyester was below 12 mg KOH/ gr. resin. Subsequently 392 g of isophthalic acid was added and the esterification was continued til an acid value of 30,2. The last part of the esterification was carried out under reduced pressure. The acid value of the resin was 30.2, the dynamic viscosity η (120°C, 1 rad/sec) 3975 Pas, the dynamic viscosity η (180°C,1 rad /sec) 88 Pas and the phase angle δ (120°C,1 rad /sec) 67 degrees.

## Claims

1. An amorphous polyester having a dynamic viscosity η (120°C, 1 rad/sec) between 50 and 50000Pas, a dynamic viscosity η (180°C,1 rad /sec) between 0.1 and 10000 Pas and a phase angle δ (120°C,1 rad /sec) between 20 and 85 degrees.

2. The amorphous polyester according to Claim 1 **characterised in that** the dynamic viscosity η (120°C, 1 rad/sec) is between 1000 and 10000 Pas, the dynamic viscosity η (180°C, 1 rad/sec) is between 1 and 1000 Pas and the phase angle δ (120°C, 1 rad/sec) is between 40 and 80 degrees.

3. A toner composition containing an amorphous polyester comprising di-functional acid- and/or alcohol units and/or multi functional acid- and/or alcohol units and mono-functional acid units and/or mono-functional alcohol units.

4. A toner composition according to Claim 3 **characterised In that** the mono functional acid units and/ or mono functional alcohol units are present in an amount less than 30 % by weight relative to the total amount of monomers.

5. A toner composition according to any one of Claims 3-4 **characterised In that** the mono functional acid units are monocarboxylic acid units.

6. A toner composition according to any one of Claims 3-5 **characterised in that** the polyester has a dynamic viscosity η (120°C, 1 rad/sec) between 50 and 50000Pas, a dynamic viscosity η (180°C,1 rad /sec) between 0.1 and 10000 Pas and a phase angle δ (120°C,1 rad /sec) between 20 and 85 degrees.

7. A toner composition according to Claim 6 **characterised in that** the amorphous polyester has a dynamic viscosity η (120°C, 1 rad/sec) between 1000 and 10000 Pas, a dynamic viscosity η (180°C,1 rad/sec) between 0.1 and 1000 Pas and a phase angle δ (120°C,1 rad/sec) between 40 and 80 degrees.
